(19) Europäisches Patentamt
European Patent Office
Office européen des brevets

(11) Numéro de publication: **0 002 636**
**B1**

(12) **FASCICULE DE BREVET EUROPEEN**

(45) Date de publication du fascicule de brevet: **07.10.81**

(21) Numéro de dépôt: **78400212.3**

(22) Date de dépôt: **05.12.78**

(51) Int. Cl.³: **C 01 B 7/14,** B 01 D 15/00, C 02 F 1/28, G 21 F 9/00, B 01 D 53/34

# (54) Procédé de fixation de l'iode et sa préparation industrielle.

(30) Priorité: **14.12.77 FR 7737613**

(43) Date de publication de la demande: **27.06.79 Bulletin 79/13**

(45) Mention de la délivrance du brevet: **07.10.81 Bulletin 81/40**

(84) Etats Contractants Désignés: **BE DE FR GB NL SE**

(56) Documents cités: **Tenside Detergents, vol. 14, n° 3 (1977) pages 119—122 (F. WOLF et S. LINDAU)**

(73) Titulaire: **P C U K PRODUITS CHIMIQUES UGINE KUHLMANN**
**Service Propriété Industrielle Tour Manhattan**
**F-92087 PARIS LA DEFENSE 2 Cédex 21 (FR)**

(72) Inventeur: **Person, Lucien, M.**
**132 rue du Président Wilson**
**F-92300 Levallois-Perret (FR)**

(74) Mandataire: **Monceaux, Pierre et al,**
**PRODUITS CHIMIQUES UGINE KUHLMANN**
**Service Propriété Industrielle**
**Tour Manhattan Cédex 21 F-92087 Paris La Defense (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 002 636 B1

Procédé de fixation de l'iode et sa préparation industrielle

Le procédé de la présente invention est destiné à fixer l'iode des effluents gazeux et liquides en vue de le préparer industriellement ou de l'éliminer des effluents qu'il pollue.

L'iode est très disséminé dans la nature et sa préparation industrielle pose principalement le probléme de sa concentration à partir du solutions aqueuses ou de mélanges gazeux. Le même problème se pose lors de sa récupération pour des raisons économiques, à partir d'effluents liquides ou gazeux. Il est également important de concentrer l'iode radio-actif libéré lors du traitement des combustibles nucléaires en vue de sa récupération ou de son élimination par stockage.

On contaît différentes techniques de concentration de l'iode contenu en faibles doses dans des solutions aqueuses ou dans des mélanges gazeux. Le barbotage des effluents gazeux contenant de l'iode dans des solutions réactives telles que solutions d'ammoniaque, de soude, de carbonate de sodium, de thiosulfate de sodium, de sulfite de sodium, de nitrate d'argent est une technique très employée et efficace mais elle présente l'inconvénient de transformer l'iode en iodure métallique, donc de nécessiter une étape supplémentaire pour isoler l'iode.

L'iode gazeux ou dissous peut être adsorbé par des corps poreux tels que charbon activé, zélithe, alumine, magnésie, gel de silice, tamis moléculaire, poudre de verre. Le pouvoir adsorbant de ces corps peut être très important lorsque les solutions ou les mélanges gazeux à extraire sont fortement chargés en iode, mais est insuffisant dans le cas où ces solutions ou mélanges gazeux contiennent de très faibles concentrations d'iode. Ce pouvoir adsorbant peut être amélioré par imprégnation des corps poreux par un métal ou un sel métallique réactif vis-à-vis de l'iode. Il se forme alors des iodures et l'élution présente des difficultés. (Voir Nouveau Traité de Chimie Minérale de Paul Pascal, Masson Editeur, tome XVI p. 451 à 477).

L'iode gazeux ou dissous dans les solutions aqueuses peut être extrait par de nombreux solvants non miscibles à l'eau. Les plus cités sont le tétrachlorure de carbone, le chloroforme, le sulfure de carbone, le benzène, le kérosène, le phosphate de tributyle. Mais ces extractions nécessitent la manipulation de quantités importantes de solvants dont le maniement exige de grandes précautions (Encyclopedia of Chemical Technology, KIRK-OTHMER, 2ème éd. Vol. 11 p. 852).

L'iode gazeux ou dissous peut être fixé sur les résines échangeuses d'anions (voir Chemical Abstracts Vol. 74, n° 8, référence 33.067). Cependant cette fixation n'est possible que si les mélanges gazeux ou les solutions ne contiennent pas d'anions susceptibles de se fixer préférentiellement à l'iode sur ces résines. La régenération de ces résines transforme l'iode fixé en iodure métallique, ce qui nécessite une oxydation pour récupérer l'iode.

La demanderesse a mis au point un procédé qui permet de fixer sur résine l'iode élémentaire, non combiné, à partir de melanges gazeux ou de solutions aqueuses, sans retenir les acides ou anions présents dans ces mélanges ou solutions, de le conserver à l'état élémentaire sur résine et de l'éluer soit à l'état élémentaire soit sous forme combinée à l'état de sel métallique.

La fixation de l'iode élémentaire par le procédé de l'invention est sélective et peut se faire en présence d'acides forts tels que les acides sulfurique, nitrique, chlorhydrique et iodhydrique, de sels tels que les sulfates de sodium, nitrate de sodium, chlorure de sodium, bromure de sodium et iodure de potassium.

Les autres halogènes peuvent être également fixés par la résine capable de fixer l'iode mais le brome, le chlore et le fluor réagissent sur cette résine et la détruisent partiellement.

Le procédé de l'invention consiste à fixer l'iode sur une résine d'un type particulier. Cette résine ne comporte pas de groupements à caractères cationique ou anionique mais possède des groupements éther à caractère non-ionique

$$-(OCH_2CH_2)_nO-$$

où n a une valeur de 1 à 100.

Ces groupements éthoxy sont liés à l'hydrogène ou au reste d'un composé comportant un hydrogène labile tels que les monoalcools, polyols, phénol, phénols substitués, acide carboxylique.

Les groupements éthoxy peuvent être les seuls groupements alkoxy ou être liés à d'autres groupements alkoxy tels que les groupements propoxy et butoxy.

Les groupements éthoxy sont disponibles dans un grand nombre de produits de condensation qui sont bien connus comme solvants, agents de surface, matières de base pour la fabrication des mousses et résines de polyuréthannes ainsi que pour la préparation des lubrifiants et fluides hydrauliques et qui sont décrits par exemple dans le livre "Nonionic Surfactants" de MARTIN J, SCHICK (Surfactant Science Series).

Ces produits de condensation peuvent être soit adsorbés dans une résine macroréticulée sans fonction ionique ou sur une résine échangeuse de cations à fonction carboxylique, soit fixés par une liaison chimique sur le polymère formant le squelette d'une résine.

La capacité d'adsorption des produits de condensation des oxydes d'alcoylène sur les alcools, alkylphénols et acides, par les résines macroréticulées sans fonction ionique et par les résines

échangeuses de cations à fonction carboxylique est connue. L'adsorption des produits de condensation s'effectue par mise en contact de leur solution aqueuse avec la résine selon les techniques habituelles d'utilisation des résines échangeuses d'ions et de préférence en faisant passer la solution aqueuse dans une colonne contenant la résine.

La fixation des produits de condensation des oxydes d'alcoylènes sur les alcools, alkylphénols et acides par une liaison chimique sur le polymère formant le squelette d'une résine est réalisée en faisant réagir leur alcoolate de métal alcalin, avec une resine possédant des groupements chlorométhyle.

Les résines chlorométhylées sont connues et servent habituellement à la préparation des résines aminées échangeuses d'anions.

L'adsorption des produits de condensation sur résine macroréticulée sans fonction ionique ou sur résine échangeuse de cation à fonction carboxylique est d'autant plus facilement réalisée que leur base hydrophobe et leur poids moléculaire sont importants, tandis que la fixation des produits de condensation par réaction de leur alcoolate alcalin sur les résines chlorométhylées s'effectue plus aisément avec les produits de condensation à faible poids moléculaire pour des raisons d'accessibilité des groupements réactifs.

La fixation de l'iode sur la résine à groupement éthoxy selon la procédé de l'invention s'effectue en mettant en contact la résine avec la solution aqueuse contenant l'iode dissous ou avec le mélange gazeux contenant les vapeurs d'iode.

La mise en contact d'une solution aqueuse contenant de l'iode avec la résine à groupements éthoxy est réalisée selon les techniques habituelles d'utilisation des résines échangeuses d'ions. La technique préférée est celle qui consiste à faire passer la solution aqueuse dans une colonne contenant la résine. Il est avantageux de faire passer la solution aqueuse d'iode dans le sens ascendant afin de réaliser un classement de la résine selon sa densité donc selon sa charge en iode.

La mise en contact d'un mélange gazeux contenant de l'iode avec la résine à groupements éthoxy est réalisée selon les techniques connues utilisées pour adsorber les gaz par les charbons actifs.

L'iode fixé sur les résines à groupement éthoxy peut être déplacé par les solvents connus de l'iode dont les principaux sont: éthanol, benzene, éther, dioxane, glycérine, sulfure de carbone, cyclohexane, dodécane, chloroforme, tétrachlorure de carbone. Les éthers de glycol ont été particulièrement sélectionnés: méthyl glycol, éthyl glycol, butyl glycol, méthyl diéthylène glycol, éthyl diéthylène glycol, butyl diéthylène glycol, méthyl triéthylène glycol, ethyl triéthylène glycol, butyl triéthylène glycol.

L'élution par solvant de l'iode fixé sur les résines dont les groupements éthoxy proviennent de produits de condensation de l'oxyde d'éthylène adsorbés sur résines macroréticulées sans fonction ionique ou sur résines échangeuses de cations à fonction carboxylique, entraîne avec l'iode une partie des produits de condensation donc abaisse la capacité de fixation en iode pour les cycles suivants. Cependant, cette baisse de capacité est faible.

L'iode est récupéré à partir du solvant par des techniques connues comme l'évaporation ou la précipitation d'iodure insoluble. Le solvant peut être soit recyclé directement pour une prochaine élution, soit distillé avant recyclage. La distillation du solvent laisse comme résidu les produits de condensation entraînés. Ceux-ci peuvent être à nouveau fixés sur les résines afin qu'elles retrouvent leur capacité initiale de fixation d'iode.

L'élution par solvant de l'iode retenu sur les résines dont les groupements éthoxy sont fixés par une liaison chimique sur le polymère formant le squelette des résines, n'entraîne que l'iode et en conséquence, il n'y a pas de baisse de la capacité de fixation en iode de résine d'un cycle à l'autre. L'iode est récupéré à partir du solvant par des techniques connues telles que l'évaporation ou la précipitation d'iodure insoluble et le solvant est recyclé.

Le procédé de la présente invention, qui permet de concentrer l'iode qui se trouve à l'état très dilué dans les solutions aqueuses ou dans l'air, peut s'intégrer dans les diverses techniques de la fabrication industrielle de l'iode. Il permet d'extraire l'iode des effluents pollués en vue de la récupération de l'iode ou de la purification des effluents.

Les résines à groupements éthoxy peuvent fixer l'iode radio-actif, en particulier les isotopes 129 et 131 de l'iode libéré lors du traitement des combustibles nucléaires. Cette fixation d'iode radio-actif peut être réalisée dans les conditions sévères imposées par le traitement des combustibles irradiés c'est-à-dire à partir de solutions dans l'acide nitrique dilué dans l'eau ou à partir de mélanges gazeux contenant des vapeurs nitreuses.

Les résines à groupements éthoxy chargées en iode peuvent être utilisées pour l'épuration bactériologique des eaux par passage de celles-ci sur des résines iodées. Elles peuvent également être utilisées pour effectuer des réactions d'halogénation ou d'oxydation.

Les exemples suivants illustrent l'invention sans toutefois la limiter:

## Exemples 1 à 9

Ces exemples illustrent la fixation de l'iode sur des résines à groupements éthoxy provenant de produits de condensation de l'oxyde d'éthylène adsorbés sur une résine de type macroréticulé sans fonction ionique.

Pour la préparation de la résine, on fait passer avec un débit de 600 ml par heure 2 litres d'une solution aqueuse contenant 40 g de nonylphénol éthoxylé par 10 molécules d'oxyde d'éthylène sur une

colonne chargée de 100 ml de résine de type macroréticulé sans fonction ionique (AMBERLITE xAD—4, marque déposée par ROHM & HAAS), puis on fait passer à la même vitesse 1 litre d'eau pour déplacer le nonylphénol éthoxylé non fixé en excès.

Le dosage du nonylphénol éthoxylé dans la solution et l'eau de lavage passée sur la résine montrent que 24 g de ce produit ont été fixés.

En opérant d'une façon semblable, on prépare des résines dont les groupements proviennent d'autres produits de condensation.

On fait ensuite passer avec un débit de 400 ml par heure une solution aqueuse contenant 40 g d'iode et 80 g d'iodure de potassium par litre sur une colonne chargée de 100 ml de résine à groupements éthoxy préalablement préparée par la méthode ci-dessus.

On recueille une solution contenant la totalité de l'iodure de potassium introduit, et une petite quantité d'iode permettant de calculer la quantité d'iode qui a été fixé sur la résine.

Dans les conditions de cet exemple les résultats suivants ont été obtenus:

| Provenance des groupements éthoxy | Poids en g de produit éthoxylé fixé sur 1 litre de résine | Iode en solution à 40 g/l passé par litre de résine humide | Iode (g) fixé par litre de résine humide | % d'iode retenu |
|---|---|---|---|---|
| Nonylphénol éthoxylé par 10 moles d'OE | 240 | 600 g | 542 | 90,5 |
| Octylphénol éthoxylé par 30 moles d'OE | 280 | 600 g | 553 | 92,2 |
| Alcool en $C_{13}$–$C_{15}$ éthoxylé par 7 moles d'OE | 190 | 600 g | 512 | 85,8 |
| Nonylphénol éthoxylé par 6 moles d'OE | 220 | 400 g | 380 | 95 |
| Hexanol éthoxylé par 3 moles d'OE | 170 | 400 g | 352 | 88 |
| Butyltriéthylène glycol | 190 | 400 g | 277 | 69,5 |
| Ethyltriéthylène glycol | 180 | 400 g | 270 | 67,5 |
| Méthyldiéthylène glycol | 180 | 370 g | 273 | 73.8 |
| Méthylglycol | 180 | 400 g | 268 | 67 |

Exemples 10 à 18

Ces exemples illustrent la fixation de l'iode sur des résines à groupements éthoxy provenant de produits de condensation de l'oxyde d'éthylène adsorbés sur une résine échangeuse de cations à fonction carboxylique.

On fait passer avec un débit de 600 ml par heure 1 litre d'une solution aqueuse contenant 20 g de nonylphénol éthoxylé par 6 molécules d'oxyde d'éthylène sur une colonne chargée de 100 ml de résine échangeuse de cations à fonction carboxylique (AMBERLITE IRC 84, marque déposée de ROHM & HAAS), puis on fait passer à la même vitesse 1 litre d'eau pour déplacer le nonylphénol éthoxylé non fixé sur la résine.

Le dosage du nonylphénol éthoxylé dans la solution et l'eau de lavage passée sur résine montrent que 13 g de ce produit ont été fixés.

Par une technique identique, on prépare des résines dont les groupements éthoxy proviennent d'autres produits de condensation.

On fait ensuite passer avec un débit de 400 ml par heure, une solution aqueuse contenant 40 g/l d'iode et 80 g/l d'iodure de potassium sur une colonne chargée de 100 ml de résine préparée par la technique ci-dessus.

On recueille une solution contenant la totalité de l'iodure de potassium introduit et une certaine quantité d'iode permettant de calculer la quantité d'iode fixé sur la résine.

Dans les conditions de cet exemple, les résultats suivants ont été obtenus:

| Provenance des groupements éthoxy | Poids en g de produit éthoxylé fixé sur 1 litre de résine | Iode en solution à 40 g/l passé par litre de résine humide | Iode (g) fixé par litre de résine humide | % d'iode retenu |
|---|---|---|---|---|
| Nonylphénol éthoxylé par 10 moles d'OE | 130 | 400 g | 260 | 65 |
| Octylphénol éthoxylé par 30 moles d'OE | 180 | 400 g | 282 | 70,5 |
| Alcohol en $C_{13}$–$C_{15}$ éthoxylé par 7 moles d'OE | 180 | 480 g | 350 | 73 |
| Nonylphénol éthoxylé par 6 moles d'OE | 130 | 500 g | 360 | 72,2 |
| Hexanol éthoxylé par 3 moles d'OE | 190 | 400 g | 300 | 75 |
| Butyltriéthylène glycol | 190 | 400 g | 218 | 54,5 |
| Ethyltriéthylène glycol | 190 | 400 g | 146 | 36,5 |
| Méthyldiéthylène glycol | 190 | 400 g | 146 | 36,5 |
| Méthylglycol | 190 | 400 g | 80 | 20 |

Exemples 19 à 22

On prépare une résine à groupements éthoxy provenant de produits de condensation de l'oxyde d'éthylène fixés par une liaison chimique sur le polymère formant le squelette de la résine.

Dans un ballon de 500 ml muni d'un réfrigérant, d'une prise de température, d'une arrivée d'azote et d'une agitation, 0,33 mole d'alcoolate de sodium du méthyl triéthylène glycol diluè dans 150 g d'éther diméthylique de diéthylène glycol sont préparées, puis on ajoute 50 g de résine formée d'un squelette de copolymère de styrène et de divinylbenzène sur lequel sont fixés des groupements chlorométhyles (0,275 groupement pour 50 g de résine).

Le mélange est chauffé à 140°C pendant 12 heures puis après refroidissement la résine est filtrée et lavée à l'eau. 0,24 groupement $CH_3(OCH_2CH_2)_3O$— ont été fixés et le volume dans l'eau de la résine ainsi synthétisée est de 190 ml.

Un autre mode de préparation de résine à groupements éthoxy provenant de produits de condensation de l'oxyde d'éthylène fixés par une liaison chimique sur le polymère formant le squelette de la résine peut être utilisé.

On prépare dans un ballon de 500 ml muni d'un réfrigérant, d'une prise de température, d'une arrivée d'azote et d'une agitation, 0,275 mole d'alcoolate de sodium du nonylphénol éthoxylé par 6 molécules d'oxyde d'éthyléne dilué dans 170 g de xylène, puis on ajoute 50 g de résine formée d'un squelette de copolymère de styrène et de divinylbenzène sur lequel sont fixés des groupements chlorométhyles (0,275 groupement pour 50 g de résine). Le mélange est chauffé à 130°C pendant 8 heures puis après refroidissement la résine est filtrée at lavée à l'eau. 0,17 groupement

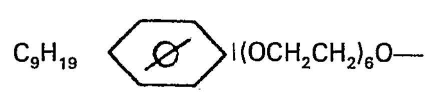

ont été fixés sur la résine dont le volume dans l'eau est alors de 260 ml.

Par l'une des techniques ci-dessus décrites, on a préparé des résines possédant les groupements suivants:

| | Nombre de groupements fixés pour 50 g de résine chlorométhylée | Volume de résine humide (ml) |
|---|---|---|
| $C_9H_{19}$ 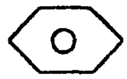 $(OCH_2CH_2)_6O-$ | 0,17 | 260 |
| Alcoyl $C_{13}-C_{15}(OCH_2CH_2)_7O-$ | 0,21 | 270 |
| $C_4H_9\ (OCH_2CH_2)_3O-$ | 0,21 | 270 |
| $C_8H_{17}$ 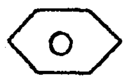 $(OCH_2CH_2)_{30}O-$ | 0,10 | 190 |
| $CH_3\ (OCH_2CH_2)_3O-$ | 0,24 | 190 |
| $CH_3\ (OCH_2CH_2)_2O-$ | 0,24 | 190 |
| $CH_3\ OCH_2CH_2O-$ | 0,24 | 190 |

On fait passer avec un débit de 100 ml par heure une solution aqueuse contenant 40 g/l d'iode et 80 g/l d'iodure de potassium sur une colonne chargée de 30 ml d'une résine préparée par l'une des méthodes décrites ci-dessus, où les produits de condensation de l'oxyde d'éthylène sont fixés sur le polymère formant le squelette de la résine par une liaison chimique.

On recueille une solution contenant la totalité de l'iodure de potassium introduit et une quantité d'iode qui permet de calculer la quantité d'iode fixé sur la résine.

Dans les conditions de cet exemple, les résultats suivants ont été obtenus:

| Nature des groupements éthoxy | Iode en solution à 40 g/l passé par l de résine | Iode (g) fixé par litre de résine humide | % d'iode fixé |
|---|---|---|---|
| Alcoyl $C_{13}-C_{15}(OCH_2CH_2)_7O-$ | 330 g | 300 | 91 |
| $C_4H_9\ (OCH_2CH_2)_3O-$ | 400 g | 250 | 62,5 |
| $C_9H_{19}$ 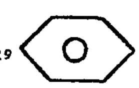 $(OCH_2CH_2)_6O-$ | 330 g | 260 | 79 |
| $C_8H_{17}$ 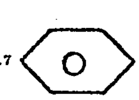 $(OCH_2CH_2)_{30}O-$ | 330 g | 300 | 91 |

Exemples 23 à 28

On fait passer, avec un débit de 200 ml à l'heure, une solution aqueuse contenant 250 mg/l d'iode et 0,5 g/l d'iodure de potassium sur une colonne chargée de 20 ml d'une résine préparée par l'une des méthodes décrites dans les exemples 19 à 22. On recueille la totalité de l'iodure de potassium introduit et une certaine quantité d'iode qui permet de calculer la quantité d'iode fixé sur la résine.

Dans les conditions de cet exemple, les résultats suivants ont été obtenus:

| Nature des groupements éthoxy | Iode en solution à 40 g/l passé par l de résine | Iode (g) fixé par litre de résine humide | % d'iode fixé |
|---|---|---|---|
| Alcoyl $C_{13}$–$C_{15}$ $(OCH_2CH_2)_7O$– | 210 g | 190 | 90,5 |
| $C_4H_9$ $(OCH_2CH_2)_3O$– | 275 g | 220 | 80 |
| $C_9H_{19}$ 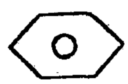 $(OCH_2CH_2)_6O$– | 280 g | 240 | 86 |
| $CH_3$ $(OCH_2CH_2)_3O$– | 250 g | 230 | 92 |
| $CH_3$ $(OCH_2CH_2)_2O$– | 190 g | 177 | 93,2 |
| $CH_3$ $OCH_2CH_2O$– | 125 g | 76 | 60,5 |

Exemples 29 à 32

On fait passer avec un débit de 250 ml par heure une solution aqueuse contenant 2,5 g/l d'iode et 5 g/l d'iodure de potassium sur une colonne chargée de 30 ml de résine préparée suivant l'une des méthodes décrites dans les exemples 19 à 22. On recueille la totalité de l'iodure de potassium introduit et une certaine quantité d'iode qui permet de calculer la quantité d'iode fixé sur la résine.

Dans les conditions de cet exemple, les résultats suivants ont été obtenus:

| Nature des groupements éthoxy | Iode en solution à 2,5 g/l passé par litre de résine | Iode (g) fixé par litre de résine humide | % Iode fixé |
|---|---|---|---|
| $C_9H_{19}$ 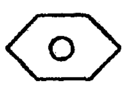 $(OCH_2CH_2)_6O$– | 330 g | 240 | 72,8 |
| $C_8H_{17}$ 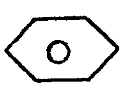 $(OCH_2CH_2)_{30}O$– | 375 g | 240 | 64 |
| Alcoyl $C_{13}$–$C_{15}$ $(OCH_2CH_2)_7O$– | 375 g | 270 | 72 |
| $C_4H_9$ $(OCH_2CH_2)_3O$– | 500 g | 280 | 56 |

Par ailleurs, l'essai effectué sur la résine chargée en nonylphénol éthoxylé a été répété en éluant chaque fois la résine avec un solvant différent de façon à tester l'efficacité de ceux-ci.

Dans cet exemple 7 à 7,5 g d'iode sont à chaque essai fixés sur la résine. Le passage de 50 ml de solvant sur les 30 ml de résine a permis d'éluer:

| | |
|---|---|
| — Benzène | 2,2 g d'iode |
| — Méthanol | 2,8 g „ |
| — Sulfure de carbone | 0,3 g „ |
| — Chloroforme | 1,2 g „ |
| — Cyclohexane | 0,7 g „ |
| — Dodécane | 0,9 g „ |
| — Méthylglycol | 7,1 g „ |
| — Méthyldiéthylène glycol | 7,3 g „ |
| — Ethyldiéthylène glycol | 6,4 g „ |
| — Butyltriéthylène glycol | 7,2 g „ |

Ceci montre l'efficacité des éthers de glycol pour éluer l'iode fixé sur les résines et régénérer celles-ci.

Exemple 33

On fait passer avec un débit de 200 ml par heure, 37 litres d'une solution aqueuse contenant 1,48 g d'iode (40 mg/l) sur une colonne chargée de 20 ml de résine à groupements

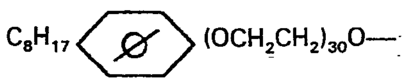

liés à la résine. On recueille une solution contenant 0,26 g d'iode. La quantité d'iode fixé est donc de 1,22 g soit de 61 g par litre de résine et 82% de l'iode introduit.

Exemple 34

On fait passer avec un débit de 200 ml par heure, 86 litres d'eau de mer synthétique contenant par litre:

| | |
|---|---|
| — NaCl | 26,70 g |
| — $MgCl_2$, 6 $H_2O$ | 7,00 g |
| — $MgSO_4$, 7 $H_2O$ | 4,30 g |
| — $CaSO_4$, 2 $H_2O$ | 1,75 g |
| — KCl | 0,72 g |

à laquelle on ajoute:

| | |
|---|---|
| — Iode | 40 mg |

sur une colonne chargée de 20 ml de résine à groupements alcoyl $C_{13}$—$C_{15}$ $(OCH_2CH_2)_7O$— liés à la résine. On recueille une solution contenant 250 mg d'iode. La quantité d'iode fixé est donc de 3,19 g soit de 159 g par litre de résine, et 92,5% de l'iode introduit.

Exemple 35

On fait passer avec un débit de 200 ml par heure, 108 litres d'eau de mer synthétique de même composition que celle indiquée dans l'exemple 34, à laquelle on ajoute 10 mg d'iode par litre, sur une

colonne chargée de 20 ml de résine à groupements alcoyl $C_{13}$—$C_{15}$ $(OCH_2CH_2)_7O$— liés à la résine. On recueille une solution contenant 35 mg d'iode. La quantité d'iode fixé est donc de 1 055 mg soit de 52 g par litre de résine, et 97,5% de l'iode introduit.

Exemples 36 et 37

On fait passer avec un débit de 200 ml par heure, 28 litres d'une solution aqueuse contenant 7 g d'iode (250 mg/l) et 14 g d'iodure de potassium sur une colonne chargée de 20 ml de résine à groupements éthoxy provenant de polypropylène glycol de poids moléculaire 1 800 éthoxylé par 5 molécules d'oxyde d'éthylène adsorbé sur une résine macroréticulée sans fonction ionique (AMBERLITE XAD 4, marque déposée de ROHM & HAAS) préparée selon la méthode indiquée dans les exemples 1 à 9.

On recueille une solution contenant 0,6 g d'iode et 14 g d'iodure de potassium. La quantité d'iode fixé est donc de 6,4 g soit 320 g par litre de résine, et 91,5% de l'iode introduit.

Dans les conditions de cet exemple en adsorbant sur le résine préalablement à l'iode de l'alcool en $C_{13}$—$C_{15}$ éthoxylé par 7 molécules d'oxyde d'éthylène au lieu du propylène glycol de poids moléculaire 1 800 éthoxylé par 5 molécules d'oxyde d'éthylène, on a fixé par litre de résine 366 g d'iode pour 400 g passés sur la résine, soit 91,5% de l'iode introduit.

Exemple 38

On fait passer avec un débit de 160 ml par heure, 10 litres d'une solution de 2,5 g d'iode (250 mg/l) dans l'acide nitrique 3 N sur une colonne chargée de 20 ml de résine à groupements éthoxy provenant d'alcool $C_{13}$ à $C_{15}$ éthoxylé par 7 molécules d'oxyde d'éthylène adsorbé sur une résine macroréticulée sans fonction ionique (AMBERLITE XAD 4, marque déposée par ROHM & HAAS).

On recueille une solution d'acide nitrique 3 N contenant 0,75 g d'iode. La quantité d'iode fixé est donc de 1,75 g soit 87 g par litre de résine, at 70% de l'iode introduit.

Exemple 39

On fait passer avec un débit de 120 ml par heure, 8 litres d'une solution de 2,0 g d'iode (250 mg/l) dans l'acide nitrique 3 N sur une colonne chargée de 20 ml de résine à groupements

$CH_2OCH_2$ $CH_2O$— liés à la résine.

On recueille une solution d'acide nitrique 3 N contenant 0,65 g d'iode. La quantité d'iode fixé est donc de 1,35 g soit 67 g par litre de résine et 67,5% de l'iode introduit.

Exemples 40 et 41

On fait passer de l'air chargé d'environ 1 mg d'iode par litre, avec un débit de 100 litres par heure, pendant 50 heures, sur une colonne chargée de 20 ml de résine à groupements

$C_8H_{17}$ 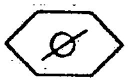 $(OCH_2CH_2)_{30}O$— liés à la résine.

Après arrêt du passage de l'air, on déplace l'iode fixé par la résine par 50 ml de méthyl glycol. La quantité d'iode élué par le méthyl glycol est de 4,5 g ce qui correspond à 225 g d'iode fixé par litre de résine, et 90% de l'iode introduit.

Dans les conditions de cet exemple avec une résine sur laquelle sont liés des groupements

$C_9H_{19}$ 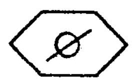 $(OCH_2CH_2)_6O$—, on a fixé 190 g par litre de résine.

Exemple 42

On fait passer de l'air chargé d'environ 0,2 mg d'iode par litre, avec un débit de 500 litres par heure, pendant 50 heures sur une colonne chargée de 20 ml de résine à groupements $C_4H_9(OCH_2CH_2)_3O$— liés à la résine.

Après arrêt du passage de l'air, on déplace l'iode fixé par la résine par 50 ml de méthyl glycol. La quantité d'iode élué par le méthyl glycol est de 4,3 g ce qui correspond à 215 g d'iode fixé par litre de résine et 86% de l'iode introduit.

Un deuxième passage d'air chargé d'iode, dans les mêmes conditions, sur ces 20 ml de résine, permet de fixer 240 g d'iode par litre de résine.

Exemple 43

On fait passer de l'air chargé d'environ 25 mg d'iode et d'environ 500 mg de peroxyde d'azote par litre, avec un débit de 50 litres par heure, pendant 1 heure sur une colonne chargée de 50 ml de résine à groupements éthoxy provenant de nonylphénol éthoxylé par 10 molécules d'oxyde d'ethylène adsorbé sur une résine macroréticulée sans fonction ionique (AMBERLITE XAD 4, marque déposée de ROHM & HAAS). Puis on fait passer de l'air chargé d'environ 25 mg d'iode par litre, sans peroxyde d'azote, au même débit pendant 7 heures. Malgré la présence du peroxyde d'azote adsorbé sur la résine, l'iode se fixe sur cette résine.

Après arrêt du passage d'air, on déplace l'iode fixé par 100 ml de méthyl glycol. La quantité d'iode

élué par le méthyl glycol est de 9,4 g ce qui correspond à 188 g d'iode fixé par litre de résine et 94% de l'iode introduit.

**Revendications**

1. Procédé de fixation de l'iode gazeux ou dissous caractérisé par le passage du mélange gazeux ou de la solution aqueuse contenant l'iode sur une résine possédant des groupements éther à caractère non-ionique —$(OCH_2CH_2)_nO$— où n a une valeur de 1 à 100.

2. Procédé selon la revendication 1 où la résine possédant des groupements éther à caractère non-ionique de type éthoxy est obtenue par adsorption d'un produit de condensation éthoxylé sur une résine macroréticulée sans fonction ionique.

3. Procédé selon la revendication 1 où la résine possédant des groupements éther à caractère non-ionique de type éthoxy est obtenue par adsorption d'un produit de condensation éthoxylé sur une résine échangeuse de cations à fonction carboxylique.

4. Procédé selon la revendication 1 où la résine possédant des groupements éther à caractère non-ionique de type éthoxy est obtenue par fixation d'un produit de condensation éthoxylé, par une liaison chimique, sur le polymère formant le squelette d'une résine.

5. Procédé de préparation industrielle de l'iode selon lequel l'iode fixé selon le procédé de la revendication 1 est déplacé par des éthers de glycol.

6. Procédé de fixation suivant la revendication 1 caractérisé par le fait que l'on traite l'iode radioactif contenu dans les combustibles nucléaires, les vapeurs ou les solutions qui résultent du traitement des combustibles en milieu nitrique et, en particulier, les solutions de lavage des vapeurs qui contiennent de l'acide nitrique, des oxydes d'azote et de l'iode.

**Claims**

1. Process for fixing gaseous or dissolved iodine, characterised by passing the gaseous mixture or the aqueous solution containing the iodine over a resin having ether groups of a non-ionic nature —$(OCH_2CH_2)_nO$— where n has a value of from 1 to 100.

2. Process according to claim 1, wherein the resin having non-ionic ether groups of the ethoxy type is obtained by the adsorption of an ethoxylated condensation product on a macro-crosslinked resin without an ionic function.

3. Process according to claim 1, wherein the resin having non-ionic ether groups of the ethoxy type is obtained by the adsorption of an ethoxylated condensation product on a cation exchanger resin with a carboxylic function.

4. Process according to claim 1, wherein the resin having non-ionic ether groups of the ethoxy type is obtained by fixing an ethoxylated condensation product, by a chemical bond, on the polymer forming the skeleton of a resin.

5. Process for the industrial preparation of iodine, according to which the iodine fixed by the process according to claim 1 is displaced by glycol ethers.

6. Fixing process according to claim 1, characterised in that the radioactive iodine contained in nuclear fuels, the vapours or solutions resulting from the treatment of fuels in a nitric medium and, in particular, the washing solutions for the vapours which contain nitric acid, nitrogen oxides and iodine is or are treated.

**Patentansprüche**

1. Verfahren zum Binden von gasförmigen oder gelöstem Jod, gekennzeichnet durch die Führung des gasförmigen Mischung oder der wässrigen Lösung, die das Jod enthält, über ein Harz, das Äthergruppen mit nicht-ionischem-$(OCH_2CH_2)_nO$—Charakter besitzt, wobei n einen Wert zwischen 1 und 100 hat.

2. Verfahren nach Anspruch 1, bei dem das Harz, das Äthergruppen mit nicht-ionischem Charakter des Äthoxytyps besitzt durch Adsorption eines äthoxylierten Kondensationsproduktes auf einem makrovernetzten Harz ohne ionische Funktion erhalten wird.

3. Verfahren nach Anspruch 1, bei dem das Harz, das Äthergruppen mit nicht-ionischem Charakter des Äthoxytyps besitzt durch Adsorption eines äthoxylierten Kondensationsproduktes auf einem Kationenaustauscherharz mit Carboxylsäuergruppen erhalten wird.

4. Verfahren nach Anspruch 1, bei dem das Harz, das Äthergruppen mit nicht-ionischem Charakter vom Äthoxytyp besitzt durch Binden eines äthoxylierten Kondensationsproduktes durch chemische Bindung an ein Polymer erhalten wird, das das Skelett eines Harzes bildet.

5. Verfahren zur industriellen Herstellung von Jod, bei dem das nach dem Verfahren des Anspruchs 1 hergestellte Jod durch Glykoläther entfernt wird.

6. Verfahren zur Bindung nach Anspruch 1, dadurch gekennzeichnet, daß man radioaktives Jod, das in Kernbrennstoffen enthalten ist, die Dämpfe oder die Lösungen, die aus der Behandlung von Brennstoff in salpetersaurem Medium resultieren, und insbesondere die Waschlösungen von Dämpfen behandelt, die Salpetersäure, Stickoxide und Jod enthalten.